# EUROPEAN PATENT APPLICATION

(11) **EP 1 323 647 A1**
(43) Date of publication of application: **02.07.2003**
(21) Application number: 02026335.6
(22) Date of filing: 21.11.2002
(51) Int. Cl.: B65G 13/10, B65G 47/54

(54) **Packet sorting system**

(30) Priority: 24.12.2001 ES 200102876
(71) Applicant: Transportes Ochoa, S.A., 50003 Zaragoza (ES)
(72) Inventor: Jose Ignacio Ochoa de Chinchetru Sacristan, 50002 Zaragoza (ES)
(74) Representative: Isern Jara, Nuria

(57) **Abstract**

A packet sorting system that is applicable for all those companies that have loading terminals and for use in sorting and/or delivery centres. It is made up of a line advance for the packets and a series of sorters that divert the packets to the corresponding exit along the line in such a way that the system is made up of some sorting modules (1), with independent control installed along the sorting line. These sorters are fitted with a motor (2) that shifts the movement to a series of shafts (3) positioned transversally to the advance of the packets to be sorted. The shafts (3) transfer the revolving movement to a series of pairs of small rollers (4), which divert the packets to be sorted. The pairs of small diversion rollers (4) are mounted on their respective revolving elements in respect of the respective fixed structures (6).

## Description

### AIM OF THE INVENTION

The following invention, in accordance with that stated in the explanation of this description refers to a packet sorting system, by means of which an attempt is made to deal with the initial needs of hourly production, likewise obtaining a series of intrinsic advantages for an automatic sorting system, whose advantages can be based on:

A modular concept that allows flexibility in the configuration for the installations, modifications of the sorting lines, expansion of the installations and on occasions progressive carrying out of the assembly and the commissioning of the installation. In addition, if the concept is truly modular, even the control elements of each ejector element can have independent control, with which it is viable to carry out large installations with controls that are in general simple, allowing work to be carried out with them in spite of the fact that a part is not working.

Exits on both sides and at the same point of the installation, allowing installations to be set up with a multitude of exits in confined spaces and to carry it out in buildings with symmetrical floors.

Transfer at an angle of 90°, as for the majority of the applications it is advisable in this manner, as if there is a large amount of merchandise, to make the transfer at angles from 30° to 90° involving the use of curves for the action of the force of gravity or motorised curves at an angle of 60° with the cost and space occupied that this would mean.

Not pre-positioning the merchandise on the sorter would mean that it is not necessary for the merchandise to have to enter the sorter in a predefined position. This would considerably reduce the resources necessary in the transporter infrastructure prior to the entry of the merchandise onto the sorter. Likewise the total space that the installation would occupy within the building, thus reducing the initial cost of the installation.

A wide range of shapes, weights and sizes of merchandise, as in each particular industrial activity, it is usual to use a wide range of given merchandise formats. Hence, there is a large variety to be sorted.

Low maintenance and sturdy mechanical construction, which is very bound up with the above-mentioned as, the greater the range of merchandise, the less is the risk of breakdowns and the installations are considered as sturdy, being capable of working for long periods of time, without the need for corrective maintenance.

Initial cost of the installation that making it viable.

To conclude, the ideal sorting installation must have: a modular sorter concept, with exits on both sides at the same point at a 90° angle, which does not require complex pre-positioning of the merchandise. It must be capable of working with a wide range of shapes, sizes and weights, at the same time, which involves low cost for the acquisition and subsequent maintenance. It must have a sturdy construction that is not going to cause unexpected stoppages. It must also have simple and decentralised control systems.

### FIELD OF APPLICATION

The packet sorting system that is being put forward is suitable for application in all those companies that have loading docks, and in the sorting and/or delivery centres. For example these can be transport companies, messenger services, airports, post office sorting centres, etc.

### BACKGROUND TO THE INVENTION

As is well known in differing industrial sectors there is a growing demand for the sorting of merchandise. This is in such a way that above certain levels of production and within differing shapes of the goods the automation of said processes becomes necessary.

When the flows are high and there is a differentiator or identifier element that allows the sorting process to be automated, the application of this type of technology becomes compulsory. It also brings with it the important added value of reducing the number of human mistakes, operating costs and a computerised traceability of the process being carried out.

Hence, in a large number of industries the merchandise sorting process is inherent in the activity, beings carried out mainly on the basis of the destinations or distribution routes or any other differentiator parameter.

For a specific range of merchandise sizes, the majority of the different types of installations presently available on the market have a series of restrictions on the weight, size or shape of the merchandise.

In this way, in some cases, it is essential for the packet to have a specific geometry, in others the packet base must have a minimum consistency, in others the adherence of the packet's base or equally the range of weight or size and shape has a substantial influence and this is reduced considerably if the reaching of high levels of productivity is required.

In addition, there are high productivity sorters that handle a wide range of shapes and weights, but these on occasions cause damage to the contents due to the high acceleration to which they are subjected in the ejection process. They are not recommended as suitable for sorting fragile merchandise and the sides of the containers need a certain consistency.

On the other hand, the majority of these installations have a considerable lack of flexibility when modifications are necessary to the production lines and/or must, in the majority of cases, be assembled almost in their entirety in order to be able to start to work.

Amongst the different types of sorters that are available on the market we can quote the following:
a) Tilting tray sorters. These sorters are defined by an assembly made up of non-motorised sub-assemblies and which have an upper sliding surface that tilts at the moment of ejection of the merchandise carried on said plane. Its activation is carried out by means of motor drives on a closed chain of sub-assemblies, and as such the setting in motion of the line is viable only when it is completely assembled. The entry of the merchandise to the sorter is an exact operation that is carried out by means of induction transporters at angles of 30° or 45°. The chutes can be from simple hoppers to motorised transporters that increase productivity and the cost of purchase and maintenance.
   These types of sorters have the advantage of being silent, have high productivity (up to 25,000 packets per hour), the mechanism has low maintenance, allows a wide variety of merchandise shapes (even letter envelopes) and allows for the fitting of exits on both sides of the sorter, but not at the same point.
   However, they have the disadvantage of being expensive, limitations on the size and weight of the merchandise (up to 50 kg., but normally up to 30 kg.), the transfer is by gravity and is affected by the texture of the base of the packet in the introduction into and ejection from the sorter. They have a closed circuit, which means a high degree of rigidity on the installation in regard to the future expansions/modifications on the sorting line, assembly and order of operation.
   These types of sorters are applicable to postal sorting, airports and messenger services.
b) Transversal multi-band conveyor belt sorters. These types of sorters are of the type which have a closed assembly formed by motorised sub-assemblies by means of flat continuous belts which work to the left and right at the moment of extraction of the goods being carried. Their general working is carried out by means of drive motors to a closed line of sub-assemblies, and so the activating of the line is viable when it is completely assembled. The entry of the merchandise to the sorter is an exact operation, which is carried out by means of induction conveyors at an angle of 90°. The chutes can be simple hoppers to motorised conveyors that increase the productivity and the cost of the purchase in addition to the cost of maintenance.
   These types of sorters have the advantage of being silent, have high productivity (up to 40,000 packets per hour), the mechanism has low maintenance, allows a wide variety of merchandise shapes (even letter envelopes and folded clothing). There is a low level of effect from the texture of the base of the packet allowing exits to both sides of the sorter and transfer at an angle of 90°.
   Amongst the disadvantages of these types of sorter we can state that they are expensive, high maintenance costs, a limitation on the size and weight of the merchandise (up to 10 kg.), they have a closed circuit, which means a high degree of rigidity on the installation in regard to the future expansions/modifications on the sorting line, assembly and order of operation.
   These types of sorters are applicable to postal sorting, airports, messenger services and the textile industry.
c) Pushing shoe type sorter. These types of sorters are of the type which have a closed assembly formed by two side motorised lines onto which transverse sliding elements are fitted in which the pusher shoes move. There is a single driving element on the line, which is located at the end of the line.
   These pusher shoes are guided by means of some sub-assemblies with pneumatic activation, and which carry out a function similar to that of a change of route at the points on a railway, the number of shoes being moved laterally depending on the length of the goods to be sorted and the goods exiting along lines which may or may not be motorised and which are arranged at an angle of 30° to the main line.
   Amongst the advantages that we can quote is that these types of sorters have high productivity (up to 12,000 packets per hour), accepting a wide range of sizes (from 0.2 to 1.5 metres in length) and weights (0.5 to 50 kg.) for the goods , and allowing for the fitting of exits on both sides of the sorter.
   Amongst the disadvantages of this type of sorter that we can quote is the noise level, maintenance costs, assembly and order of operation, and the transfer at a 30° angle.
   These types of sorters are applicable to packet transport agencies and distribution centres.
d) Roller sorters with turn and lift movement or Pop-up Sorters. These types of sorters are of the type, which have a series of sub-assemblies for the diverting of the goods, and are made up with a variable number of small motorised wheels that turn and lift when the time comes to eject the goods. These wheels, depending on the application, are fitted on a plane that is slightly lower or higher than the normal transport plane, which is made up of one or several lines with longitudinal movement that transports the goods along the sorting line. A slight lateral and upward tilting movement for the transfer is made against the box and this is absorbed by a transporter or by a longitudinal ejector roller towards the exit chute, which may or may not be motorised depending on the productivity demanded.
   Amongst the advantages that we can quote for these types of sorters is the cost of acquisition, their high productivity (up to 10,000 packets per hour), accepting a wide range of sizes (from 0.2 to 1.5 metres in length) and weights (0.5 to 50 kg.) for the goods, likewise having a transfer angle of 90°.
   Amongst the disadvantages that we can quote for these types of sorter is in order to have exits on both sides of the sorter a pre-positioning of the goods must be carried out at the side to which it is to be ejected, the noise level at high transport speeds, mechanical maintenance costs, likewise the assembly and to put in order the operation for the majority of the manufacturers.
   These types of sorters are applicable to packet transport agencies, distribution centres, airports, etc.
e) Pusher Sorters. These types of sorters are made up on the basis of a transport element with a low coefficient for transversal friction (sliding metal band or rollers), parallel elements are fitted that push the goods by means of a vane, moving it and sweeping an area occupied by the goods when the deviator passes. This sweep can be carried out by the pusher vane transversally, pivoting or a combination of both movements. The chute is usually partially or completely motorised except in installations with low productivity.
   Amongst the advantages that we can quote for these types of sorters is the cost of acquisition, their modular concept and the independence between the sorter transporter and diversion pusher module, their productivity (up to 5,000 packets per hour), their wide range of sizes (from 0.2 to 1.5 metres in length) and weights (0.5 to 30 kg.) for the goods , their low cost of electro-mechanical maintenance, their mean flexibility in the assembly and commissioning processes, and the fact that they have a transfer angle of 90°.
   On the other hand, amongst the disadvantages for these types of sorter that we can quote is it is possible to have exits on both sides of the sorter, although not at the same point and a pre-positioning of the goods must be carried out at the side opposite to which it is to be ejected, these cannot be at the same point on both sides, likewise the high noise level at high transport speeds in installations with a metal belt, it is necessary for the transport element of the sorter to have a low level of friction coefficient and is not suitable for fragile items or items with irregular shapes.
   These types of sorters are applicable to packet and transport agencies in addition to distribution centres.
f) Pusher Sorters with a vertical belt or Channel Sorters. These types of sorters are made up on the basis of a transport element with a low coefficient for transversal friction (sliding metal band, hinge shaft or rollers), parallel elements are fitted that push and turn the goods by means of a single or pair of vanes that may even be motorised, pivoting the vane or vanes over the area occupied by the goods when the diverter passes. This sweep can be carried out by one or two arms that move almost parallel. It solves the fault of the pushers by being able to fit exits to both sides at the same point but with transfer angles of around 30°.

Amongst the advantages that we can quote for these types of sorters is the reduced cost of acquisition, their modular concept and the independence between the sorter transporter and diversion pusher module, their high productivity (up to 12,000 packets per hour), their being suitable for fragile items or articles with irregular shapes, the possibility of fitting exits on both sides at the same point, their mean flexibility in the assembly and commissioning processes.

Amongst the disadvantages for these types of sorter that we can quote is the high cost of maintenance, the design in disuse, and in order to have exits on both sides of the sorter it is advisable to have a pre-positioning of the goods at the side opposite to which it is to be ejected, it is necessary to have a sorter transport element with a low coefficient for transversal friction, likewise a range of sizes and weights for the goods (from 0.05 to 0.5 metres in length) and (0.1 to 10 kg.), the fact that they have a transfer angle of 30°.

These types of sorters are applicable to postal sorting offices, books, video, music, pharmacy and warehouse sorting of very small sized articles.

### DESCRIPTION OF THE INVENTION

This present invention describes a packet sorting system, being applicable for all those companies that have loading docks and sorting centres and/or delivery. It is made up of a packet line advance and a series of sorters that divert the packets to a corresponding exit along said line. This is done in such a way that the system is made up of sorting modules, having independent control, installed along the sorting line which are fitted with a motor that transfers movement to a series of shafts positioned transversally to the advance of the packets to be sorted, which shafts transmit a revolving movement to a series of pairs of small diversion rollers for the packets to be sorted. These rollers are assembled respectively on revolving elements and as such the pairs of rollers are lined up above, forming the two rows of rollers above the movement transfer axes by means of the corresponding belts. The revolving carrier elements of the pairs of small diversion rollers have a radially fitted revolving arm. This is fitted at the opposing end to the one corresponding to protrusions of a rod link mechanism on whose mechanism a cylinder acts independently, so that each row of pairs of diversion wheels is inserted into some second rollers arranged transversally to the advance of the packets and which rotate freely.

The shafts to which the motor transfers the movement and which, in turn, transfers the movement to the pairs of small rollers for the packets to be sorted has a series of notches around the perimeter and which have a trapezoidal cross section. These notches fit into the corresponding belts that transfer movement to the pairs of diversion rollers for the packets to be sorted. These notches in the trapezoidal cross section fit into the belts in such a way as to absorb the slight turn of the transfer belt when the revolving carrier elements of the pairs of small diversion rollers turn. This is for the purpose of diverting the corresponding packet to be sorted to the appropriate exit.

The carrier elements for the pairs of small diversion rollers are fitted so that they can revolve around a fixed structure.

Hence, the pairs of small diversion rollers fitted to the respective revolving elements are fitted radially, according to the direction of the advance of the packets to be classified, with a revolving arm fitted. This is fitted at the opposing end to the one corresponding to protrusions of the link rod mechanism on whose mechanism the arm acts. Independently, there is a cylinder arranged in such a way that it transfers a revolving movement in both directions of approximately 45°, to all the revolving carrier elements of the pairs of small diversion wheels in respect of one row, in such a way that with this the packets can be sent to the left or to the right, without any problem.

In addition, as the cylinders that act on the link rod mechanism for the purpose of bringing about the simultaneous turn with their movement, in the required direction, of all of the revolving carrier elements of the pairs of small diversion rollers, in respect of one row, have an independent action, the turn of the rollers will be in sequence in accordance with the advance of the packets to be diverted for their appropriate sorting.

The revolving carrier elements of the pairs of small diversion rollers, are made up from a 'U' shaped plate and a radial arm supporting it at its core, in such a way that the pairs of small diversion rollers are assembled, with capacity to rotate, between the arms of the 'U' shaped plate, being carrier elements for the pairs of diversion rollers in both directions, as a consequence of the link rod mechanism movement, to which it is joined by means of a radial arm, and to whose mechanism the link rod transfers movement to the corresponding cylinder, in such a way that the pairs of small diversion rollers, by the simple rubbing, cause the drag and the exit of the packets in one direction or another.

The link rod mechanism, associated with each one of the rows of the pairs of small diversion rollers, is made up of a plate placed, in its idle position, in parallel with the corresponding row pairs of diversion rollers, and whose plate is fitted with a series of union protrusions revolving in respect of the arm of each revolving element that fits onto the corresponding pair of diversion rollers.

Thus, the corresponding cylinder acts on each one of the link rod mechanisms in such a way that said cylinders have a revolving link at one end to the structure of the sorter module, and at the other end to the corresponding plate of the respective link rod mechanism by means of an intermediate part.

In order to complete the description that is going to be made below and for the purpose of helping to give a greater understanding of its characteristics, the present description is accompanied by a set of drawings, which are by way of illustration and not by way of limitation, where the most significant details of the invention are represented.

### BRIEF DESCRIPTION OF THE DRAWINGS

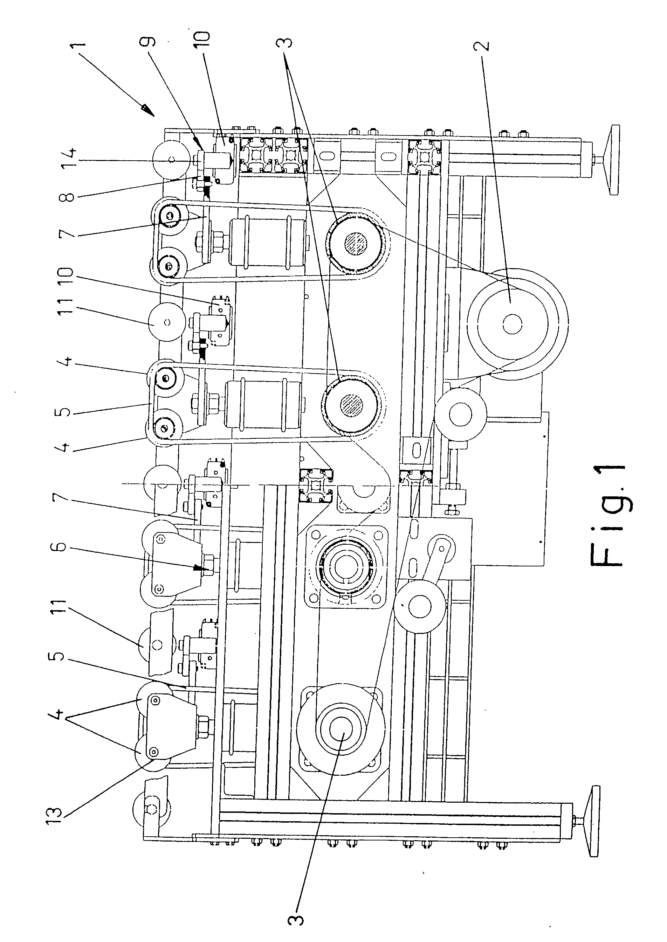

Figure 1. Showing a side elevation view of the sorter, being able to see the transmission from the drive motor to the different shafts that transfer the movement to the pairs of small diversion rollers for the packets to be sorted.

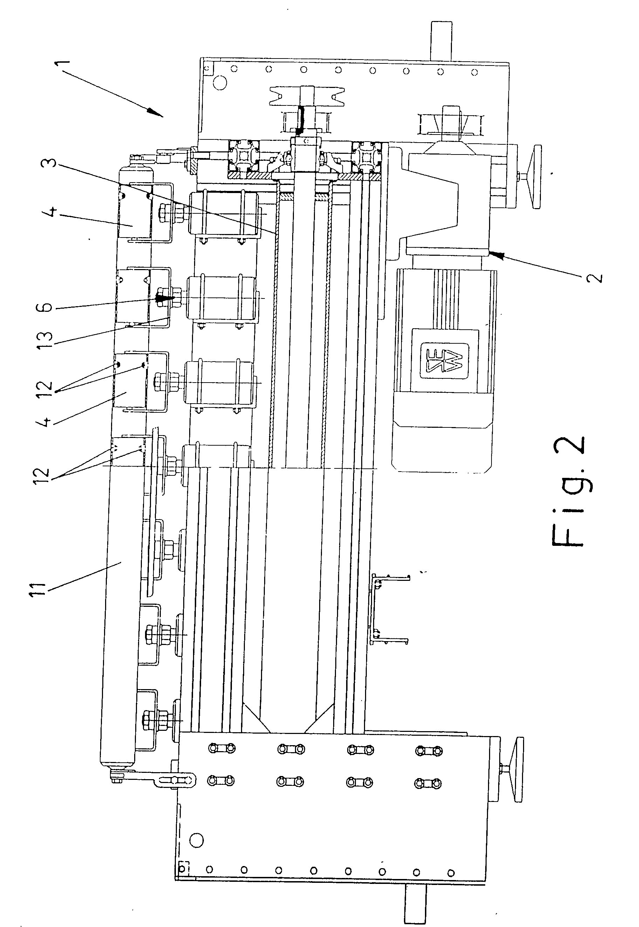

Figure 2. Showing a side elevation view of the sorter, being able to see one half in detail of one of the shafts to which the movement is transferred from the drive motor, and from which the movement is transferred to one of the rows of the pairs of diversion rollers for the packets to be sorted.

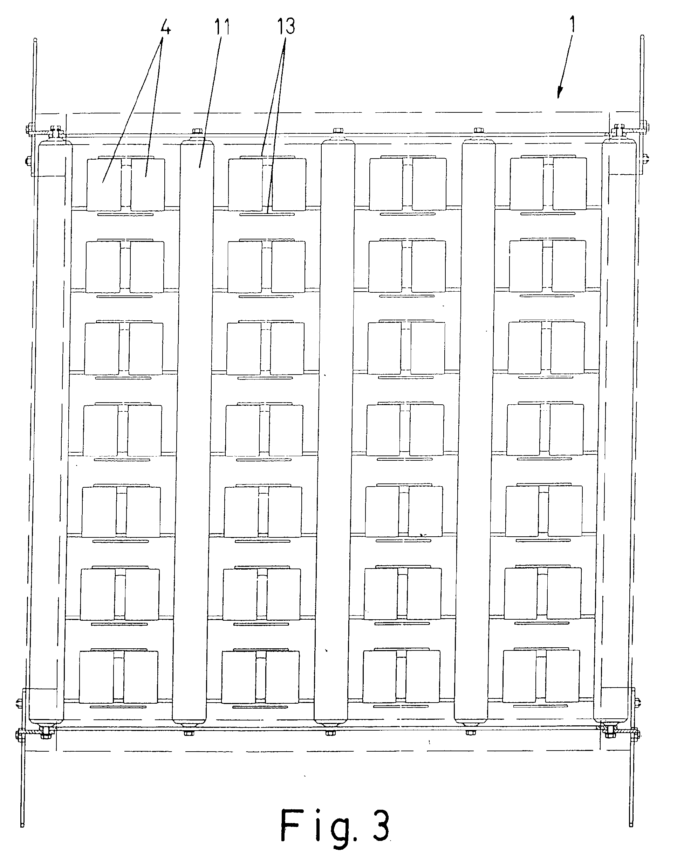

Figure 3. Showing a plan view of the sorter, being able to see the different rows of the different pairs of diversion rollers, correctly named, to which the movement is transferred from the corresponding axis.
Figure 4. Showing a plan view of the link rod mechanism that by means of the corresponding cylinder acts on the differing revolving elements of a row that the pairs of diversion rollers are assembled onto.
Figure 5. Showing a plan view of the sorter, being able to see the turn brought about in the first row of the pairs of diversion rollers, in respect of the arrival of the packet to be sorted, in order to divert the packet towards the right, depending on the direction of the advance.
Figure 6. Showing a plan view of the sorter, being able to see the sequential turn brought about in the second row of the pairs of diversion rollers, in respect of the arrival of the packet to be sorted, so as to divert the packet towards the right, in accordance with the direction of the advance, in conjunction with the first row.
Figure 7. Showing a plan view of the sorter, being able to see the sequential turn brought about in the third row of the pairs of diversion rollers, in respect of the arrival of the packet to be sorted, so as to divert the packet towards the right, in accordance with the direction of the advance, the second row remaining turned, whilst the first pairs of small diversion rollers has returned to its original position.
Figure 8. Showing a plan view of the sorter, being able to see the sequential turn brought about in the fourth row of the pairs of diversion rollers, in respect of the arrival of the packet to be sorted, so as to divert the packet towards the right, in accordance with the direction of the advance, the third row remaining turned, whilst the first and second rows of the pairs of rollers has returned to its original position, the packet now being in its diverted position.
Figure 9. Showing a plan view of the sorter, being able to see that all the pairs of diversion rollers have returned to their original position, once the packet has been diverted.
Figure 10. Showing a plan view of the sequential turn brought about in the rows of the pairs of diversion rollers, for the diversion of the packet towards the left, in accordance with the direction of the advance.
Figure 11. Showing a plan view of the sequential turn brought about in the rows of the pairs of diversion rollers, for the diversion of the packet towards the right, in accordance with the direction of the advance.

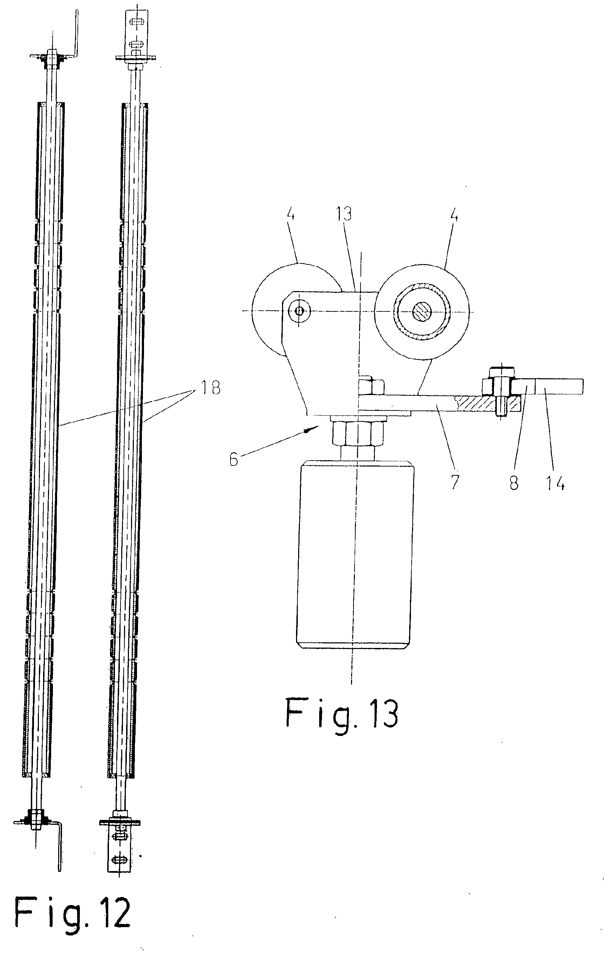

Figure 12. Showing a diversion shaft, with two positions turned through 90°, where the diversion shaft remains at each side of the sorter module in a longitudinal direction, working with the turn in the diversion of the corresponding packet towards the exterior of the sorter module.

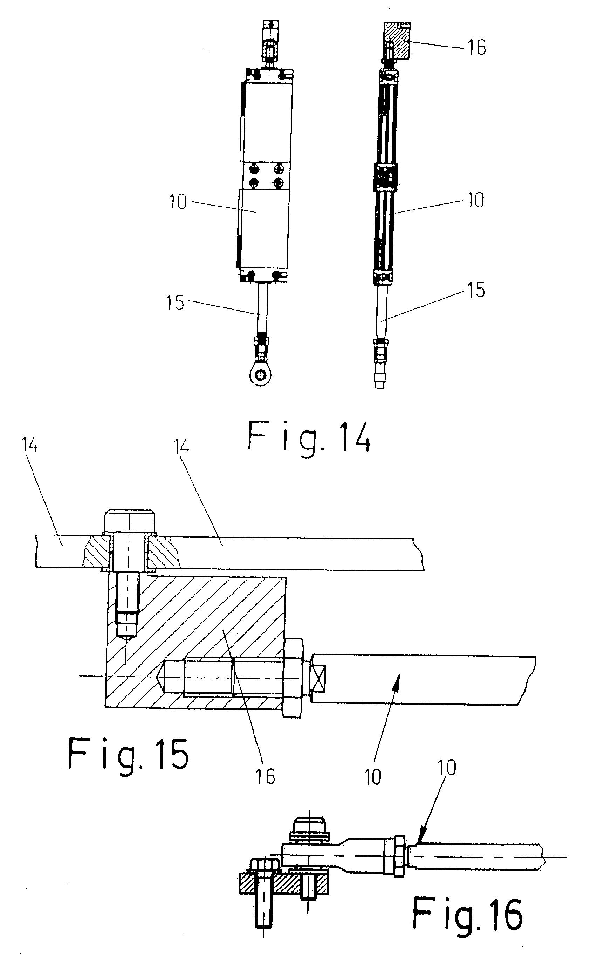

Figure 13. Showing an elevation view in detail of the union of the link rod mechanism to a revolving carrier element of the corresponding pair of the diversion rollers for the packets.
Figure 14. Showing an actuator cylinder of the corresponding link rod that acts on the respective revolving elements onto which the pairs of the diversion rollers are assembled.
Figure 15. Showing a detailed view of the union of the actuator cylinder piston to the corresponding revolving link rod and to the respective arms of the revolving carrier elements, in respect of one row, of the different pairs of the diversion rollers associated to said link rod.
Figure 16. Showing an elevation view of the union of a link rod to a revolving carrier element of the corresponding pair of the diversion rollers for the packets.

### DESCRIPTION OF A PREFERRED EMBODIMENT

In light of the commented on figures and in accordance with the adopted numbering, a preferred embodiment of the invention can be seen in same where the packet sorting system is based on some sorter modules (1), having independent control, installed along the line of sorting, normally made up from a series of conveyor belts, inserting the sorter modules (1), which define sorting exits.

Hence, the sorter installation can have the required number of sorter modules and same can be adapted to very different uses.

The sorter modules (1) are fitted with a motor (2) that transfers movement to a series of shafts (3), which are positioned transversally to the advance of the packets to be sorted, and where the shafts (3) transfer the turning movement to a series of pairs of small diversion rollers (4) to divert the packets to be sorted. These pairs of diversion rollers are assembled on respective turning elements, being lined up above the respective rows on the shafts (3) that transfer the movement by means of the corresponding belts (5).

Thus, the pairs of small diversion rollers (4) for the packets to be sorted are assembled in their respective revolving elements, in the fixed structure (6), whose revolving elements are held by a 'U' shaped plate (13) and a radial arm (7) joined to its base, in such a way that said arm (7) is joined in a turning manner to a link rod mechanism (9), and the respective cylinder (10) acts onto the link rod mechanism.

On the other hand, each row of the pairs of small diversion rollers (4) are inserted between some second diversion rollers (11) which are arranged transversally to the advance of the packets and can turn freely. These rollers cover the complete width of the sorter module (1).

The shafts (3) to which the motor (2) transfers the movement, and which in turn transfers movement to the pairs of small diversion rollers (4), have a series of slots around the perimeter with a trapezoidal cross section. The corresponding belts (5) to transmit movement to the respective pairs of small diversion rollers (4) fit into said slots and also fitting into the respective perimeter slots (12) of the mentioned rollers (4).

The pairs of small diversion rollers (4) are assembled in parallel between the wings of the 'U' shaped plates (13) of the revolving elements and these are assembled and fitted to the respective fixed structures (6) which are provided with radially revolving elements, depending on the direction of the advance of the packets to be sorted by using an arm (7) joined with a revolving link to a link rod mechanism (9).

The above-mentioned link rod mechanism is surrounded by a plate (14) fitted with a series of protrusions (8), by means of which it has a revolving link to respective arms (7), the link rod mechanism (9) being activated by a cylinder (10). The activating by means of the cylinder (10) is capable of transferring a revolving movement to the arms (7) in both directions, at an approximate angle of 45°, which involves the corresponding turn of all the revolving elements, in respect of one single row of the carriers of the pairs of small diversion rollers (4).

Thus, the revolving elements that make up the 'U' shaped plate (13) and the radial arm (7) arranged in such a way that the corresponding pair of small diversion rollers (4) are between the wings of the 'U' shaped plate (13) and are capable of being moved in a circular manner in both directions by means of the link rod mechanism (9). This mechanism is activated by the corresponding cylinder (10), in such a way that the combined movement of the revolving elements of one row involves the turning movement of the pairs of small diversion rollers (4) in one direction or another, for the purpose of diverting the packet towards the required side.

On the other hand, the link rod mechanism (9), connected to each one of the rows of the pairs of small diversion rollers (4) is made up of a plate (14), in its idling position, is placed in parallel to the corresponding row of pairs of diversion rollers (4), and being fitted with a series of protrusions (8) to make a swivel joint with the respective arm (7) of each revolving element that it fits the corresponding pair of small diversion rollers (4).

Finally, the corresponding cylinder (10) acts on each one of the link rod mechanisms (9). These cylinders (10) are swivel jointed to the structure of the sorter module (1) by one of the ends, and at the other end (15) are swivel jointed to the corresponding plate (14) of the link rod mechanism (9) by means of a base unit (16).

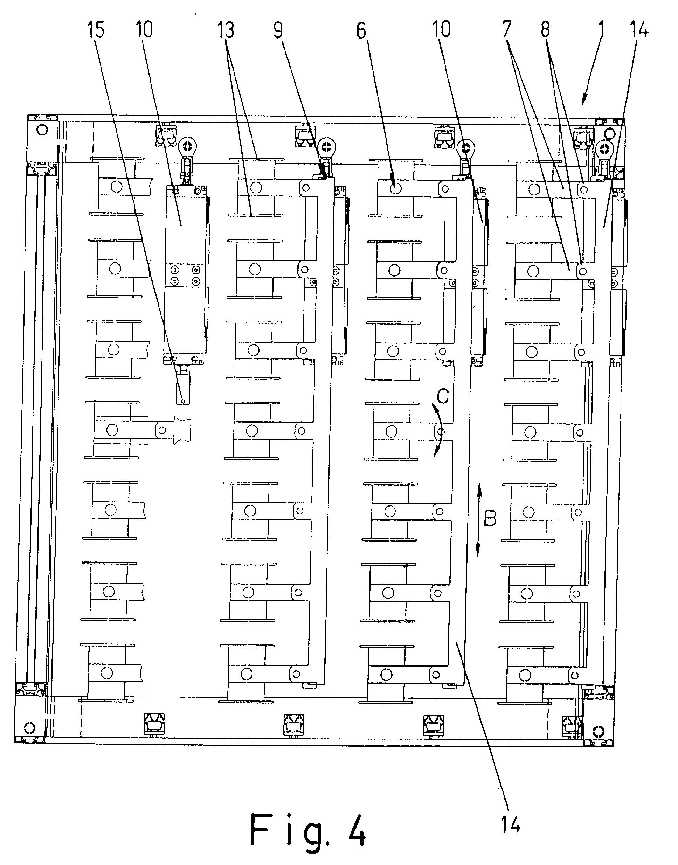

In accordance with that stated and that shown in figure 4 of the drawings, we can see that the activating of the cylinder (10) can bring about the movement of the plate (14) in two directions, as shown by the arrow B, which in turn makes the revolving carrier elements of the respective pair of small diversion rollers (4) able to turn in either of the two directions shown by the arrow C. This allows the packets (17) to be able to be diverted towards the left or towards the right, depending on the direction of the advance (arrow A).

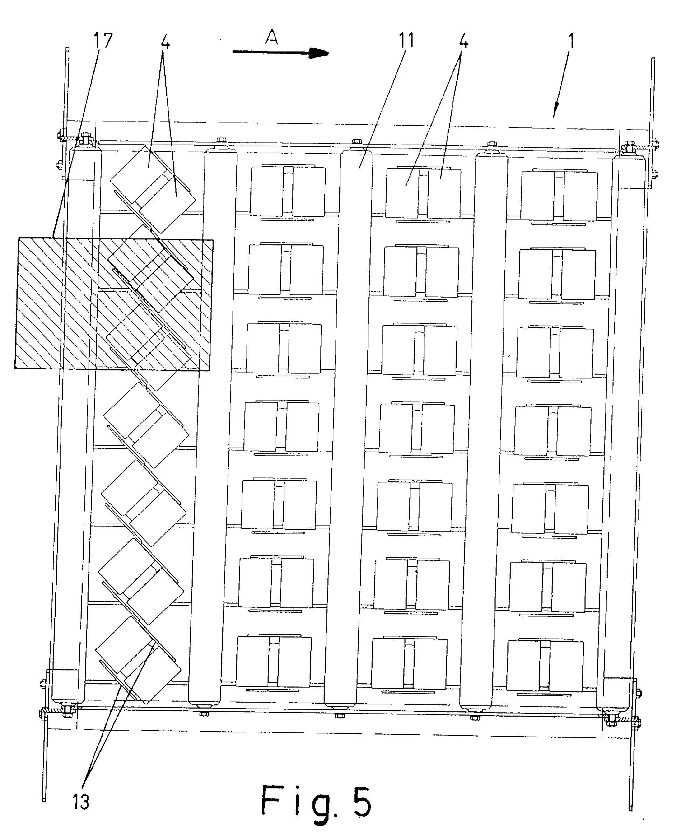

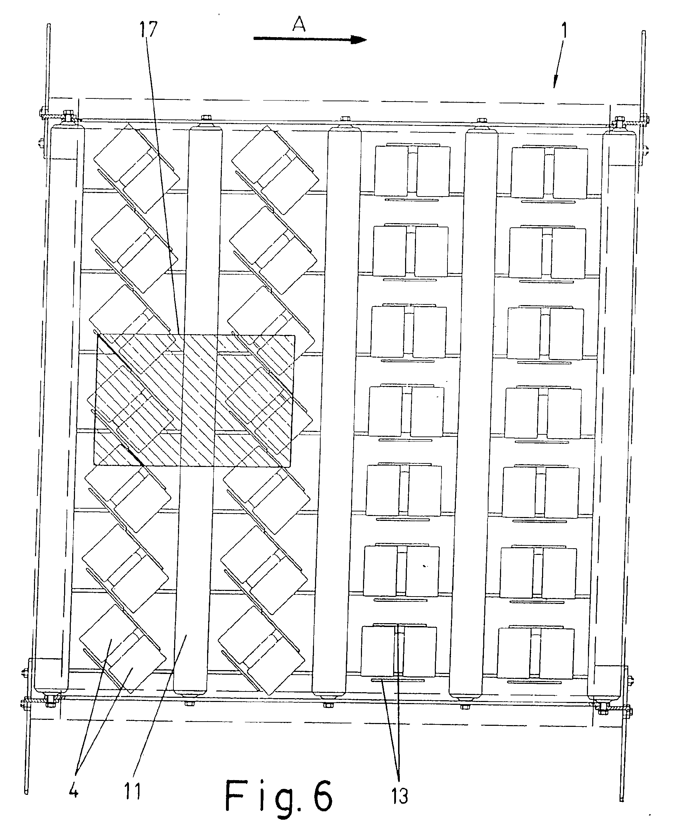

In order to make the diversion of the different packets (17) to be sorted, according to figures 5-9 we shall consider the advance of the packets in accordance with arrow A, we can see that as a packet (17) enters the sorter module (1) that has to provoke its diversion in one direction or another, in the first place a turn is produced, in the appropriate direction, of the first row of revolving carrier elements of the corresponding pairs of small diversion rollers (4) (figure 5), in such a way that, sequentially, it can be seen how the different rows of the revolving carrier elements of the respective pairs of small diversion rollers (4) turn suitably to bring about the diversion of the packet and then return to their starting position.

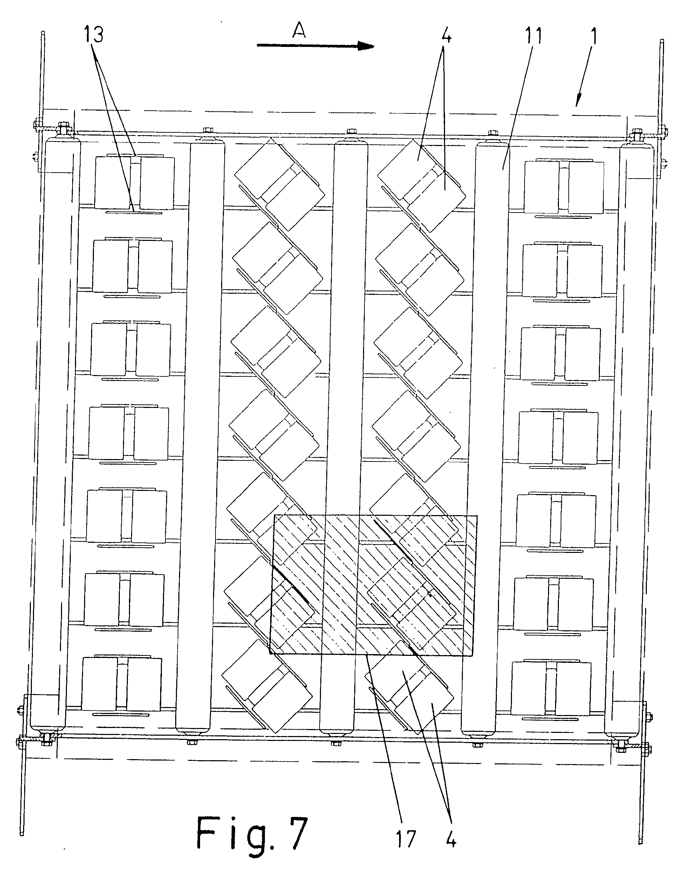

Thus, once having carried out the turn of the first row of the revolving carrier elements of the respective pairs of diversion rollers (4), in the progressive advance of the packet (17) the turn is produced of the second row of the revolving carrier elements of the respective pairs of small diversion rollers (4) (figure 7), starting the movement of the packet towards the outside.

Next, the turn of the third row of the revolving carrier elements of the pairs of diversion rollers (4) is produced, according the advance of the packet, whilst the first row of the revolving carrier elements of the respective pairs of diversion rollers (4) turn and return to their original position (figure 7).

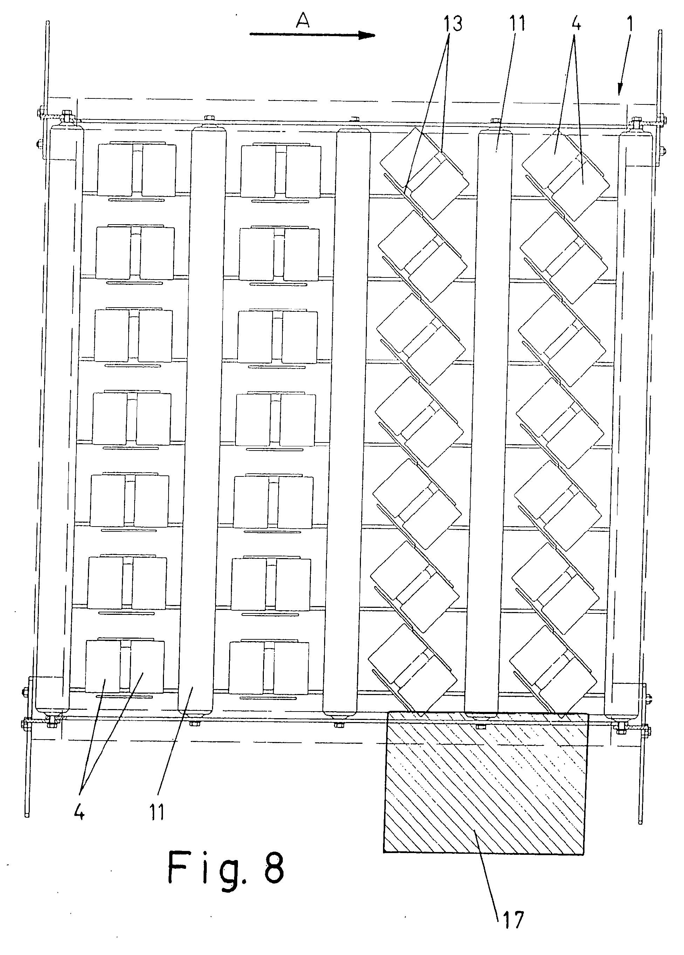

Progressively the turn of the fourth row of the revolving carrier elements of the pairs of diversion rollers (4) is produced and the second row of the revolving carrier elements of the pairs of diversion rollers (4), overriden by the advance of the packet (17), the second row returns to its original starting position (figure 8), the packet being moved off of the sorter module (1) onto the corresponding roller (18) (not shown) with which it works and which is arranged laterally and in a longitudinal to the mentioned sorter module.

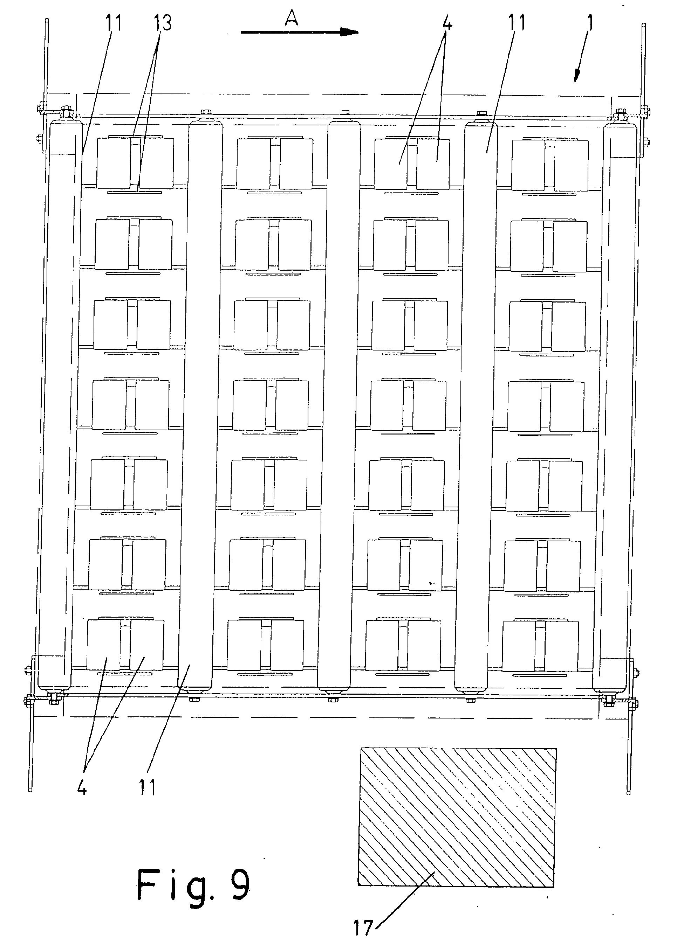

Finally, the revolving carrier elements of the pairs of diversion rollers (4) of the third and fourth rows, in the direction of the advance of the packets return to their original positions (figure 9), the packet having been correctly sorted.

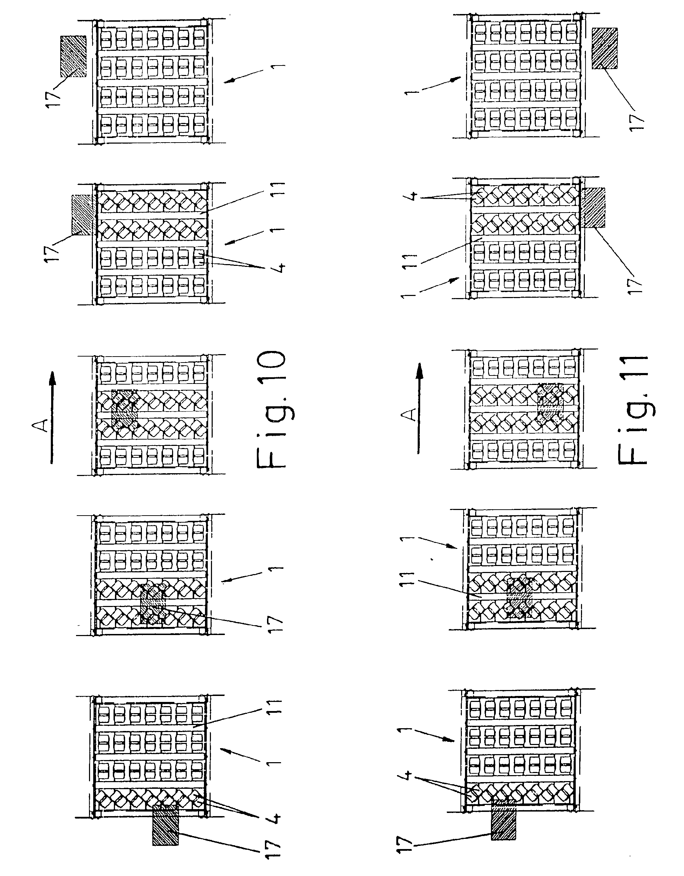

The sorting sequence of the corresponding packet that has been diverted to the left and right can be seen respectively in figures 10 and 11, depending on the direction of the advance of the packet.

Logically, the number of rows of the pairs of small diversion rollers, likewise the free turning rollers that are installed between them can be variable.

The modular concept of the sorting system allows it to have great flexibility in the configuring of installations. Modifications being able to be made to the sorting lines in addition to expansions to the installation and on occasions carrying our a progressive assembling and commissioning of the installation.

In addition, even the control elements for each ejector element can have independent control, with which it is possible to carry out large installations with controls that are generally simple. This allows them to be used in spite of the fact that a part is not working.

On the other hand, as a result of having exits on both sides and at the same point along the installation allows the configuring of installations with a multitude of exits in confined spaces and to have buildings with a symmetrical floor.

Moreover, as a consequence of not having to carry out a pre-positioning of the merchandise onto the sorter means that it is not necessary for the merchandise to enter the sorter at a pre-defined point. This considerably reduces the resources necessary in the conveyor infrastructure prior to the entry of the resources to the sorter, likewise, the total space occupied by the installation inside the building, thus reducing the initial cost of the installation.

The wide range of shapes, weights and sizes of goods accepted allows for great diversity in the sorting.

The sorter installation has low maintenance and great mechanical sturdiness, which is very closely linked to the above, as the greater the range of goods, the less is the risk of breakdowns. The installations are hence considered as sturdy, they are capable of continuing to work in spite of the fact that 100% of the parts are not working correctly.

In conclusion, the sorter installation has: a modular concept, with exits on both sides at the same point at an angle of 90°, complex pre-positioning of the goods is not necessary, being capable of working with a wide range of shapes, sizes and weights, at the same time this means low cost of maintenance and acquisition, having a sturdy construction that does not cause unexpected stoppages and all of this happening with simple and decentralised control systems.

## Claims

1. Packet sorting system, being applicable in all those companies that have loading terminals and sorting and delivery centres, being made up of a packet line advance and a series of sorters that divert the packets to the corresponding exit along the line, **characterised in that** the system is made up of some sorter modules (1), having independent control, installed along the sorting line and which have a motor (2) that transfers the movement to a series of shafts (3) positioned transversally to the advance of the packets to be sorted, whose shafts (3) transfer the rotational movement to a series of pairs of small diversion rollers (4) for the packets to be sorted; they are lined up above and form respective rows above the movement transfer shafts (3) by means of corresponding belts (5); these pairs of small diversion rollers (4) are assembled on respective rotational elements on the respective fixed structures (6), where the revolving carrier elements of the respective pairs of diversion rollers (4) are made up of a 'U' shaped plate (13) and a radial arm (7) linked to its core, this arm (7) being in position radially to the direction of the packet advance, being joined with rotating capacity to a link rod mechanism (9), on which rod mechanisms (9) the corresponding cylinder (10) acts independently, in such a way that each row of pairs of small diversion rollers (4) is inserted into some second rollers (11) arranged transversally, depending on the entire width of the sorter module (1), to the advance of the packets and having free rotation.

2. Packet sorting system, according to claim 1, **characterised in that** the shafts (3) have a series of notches around the perimeter of the trapezoidal section, into which the corresponding belts (5) fit on slotting into the respective notches (12) around the perimeter of the mentioned pair of rollers (4) for the transfer of the movement to the respective pairs of small diversion rollers (4).

3. Packet sorting system, according to claim 1, **characterised in that** the pairs of small diversion rollers (4) are fitted between the wings of the 'U' shaped plate (13) on the revolving elements, and the radially positioned arm (7), depending on the direction of the advance of the packets to be sorted, is swivel jointed to the other end of the link rod mechanism (9), which is surrounded by a plate (14) fitted with the corresponding revolving joint protrusions (8) fixed to the arms (7), and the plates (14) are activated, independently, by the respective cylinder (10) which are capable of moving in one direction or another, transferring a rotational movement with an angle of approximately 45° to all the revolving carrier elements of the respective pairs of small diversion rollers (4).

4. Packet sorting system, according to claims 1 and 3, **characterised in that** the revolving carrier elements of the respective pairs of small diversion rollers (4), fitted between the wings of the 'U' shaped plate (13) on the revolving elements and the radially positioned arm (7), are capable of turning in both directions by means of movement that transfers the shift of the link rod mechanism (9) on which the corresponding cylinder acts.

5. Packet sorting system, according to claim 1, **characterised in that** the corresponding link rod mechanism (9), fitted to each one of the rows of pairs of small diversion rollers (4), is made up of a plate (14) in its idle position, in parallel to the corresponding row of pairs of small diversion rollers (4), whose plates (14) are fitted with a series of protrusions (8) for a swivel union with the respective arm (7) of each of the revolving carrier elements of the pairs of small diversion rollers (4).

6. Packet sorting system, according to claim 1, **characterised in that** the corresponding cylinder (10) acts on each one of the link rod mechanisms (9), and one of the ends of these cylinders (10) is swivel jointed to the sorter module structure (1) and then its other end (15) is joined, through a base unit (16), to the corresponding plate (14) of the respective link rod mechanism (9).
